(19) Europäisches Patentamt / European Patent Office / Office européen des brevets

(11) **EP 4 457 781 B1**

(12) **EUROPEAN PATENT SPECIFICATION**

(45) Date of publication and mention
of the grant of the patent:
**18.03.2026  Bulletin 2026/12**

(21) Application number: **22839354.2**

(22) Date of filing: **22.12.2022**

(51) International Patent Classification (IPC):
*G06V 20/58* (2022.01)    *G08G 1/00* (2006.01)
*G06V 10/80* (2022.01)    *G08B 13/00* (2006.01)

(52) Cooperative Patent Classification (CPC):
**G06V 20/58; G06V 10/803**

(86) International application number:
**PCT/EP2022/087545**

(87) International publication number:
**WO 2023/126316 (06.07.2023 Gazette 2023/27)**

(54) **DEVICE AND METHOD FOR DETECTING A LEVEL CROSSING BARRIER**

VORRICHTUNG UND VERFAHREN ZUR DETEKTION EINER BAHNÜBERGANGSBARRIERE

DISPOSITIF ET PROCÉDÉ DE DÉTECTION D'UNE BARRIÈRE DE PASSAGE À NIVEAU

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **29.12.2021  FR 2114632**

(43) Date of publication of application:
**06.11.2024   Bulletin 2024/45**

(73) Proprietors:
• **GTS France
78140 Velizy Villacoublay (FR)**
• **Thales (China) Enterprises Management Co., Ltd
Beijing, 10026 (CN)**

(72) Inventors:
• **LAVIRON, Philippe
78141 VELIZY CEDEX (FR)**
• **ZHANG, Alex
Beijing 100026 (CN)**

(74) Representative: **Atout PI Laplace
Immeuble Up On
25 Boulevard Romain Rolland
CS 40072
75685 Paris Cedex 14 (FR)**

(56) References cited:
• **ZHAO GUANGLIANG ET AL: "A Video Analytic
System for Rail Crossing Point Protection", 2021
17TH IEEE INTERNATIONAL CONFERENCE ON
ADVANCED VIDEO AND SIGNAL BASED
SURVEILLANCE (AVSS), IEEE, 16 November
2021 (2021-11-16), pages 1 - 8, XP033997527,
DOI: 10.1109/AVSS52988.2021.9663781**

## Description

## TECHNICAL FIELD

The invention generally relates to monitoring systems and in particular to a device and a method for detecting the status of a level crossing barrier.

## BACKGROUND

The deployment of railway networks has grown rapidly over the last two decades, particularly in countries experiencing significant social and/or economic progress. In order to achieve coexistence between a railway network and other types of transport networks, e.g. road network, level crossings are widely deployed. A level crossing allows a railway line of a railway network to cross a road or a path belonging to another transport network. The use of a level crossing to achieve such coexistence is cost effective when compared to other solutions consisting, for example, to build an overpass or a tunnel. In order to achieve a certain level of safety when crossing a level crossing, a level crossing is generally equipped with a number of rotating barriers configured to control the access to the level crossing for the vehicles of one of the involved transport networks. For example, the barriers of a level crossing may be used to block the access to the level crossing for the vehicles of a road network when a control unit detects an approaching railway vehicle running on the tracks of the railway network. However, a functioning fault may occur in a level crossing, for example when the barriers of the level crossing are damaged and/or when the control unit ruling the rotational movement of the barriers is dysfunctional. Thus, there is a need for a permanent monitoring of the barriers of a level crossing.

A known solution to allow a permanent monitoring of a level crossing consists in deploying one or more cameras providing images in the visible portion of the wavelength spectrum. ZHAO GUANGLIANG ET AL., "A Video Analytic System for Rail Crossing Point Protection," 2021 17th IEEE International Conference on Advanced Video and Signal Based Surveillance (AVSS), IEEE, 16 Nov. 2021, pp. 1-8, doi:10.1109/AVSS52988.2021.9663781 discloses a video-based analytic system for monitoring and protecting rail crossing points.

However, the performance of such a solution is strongly dependent on the lighting conditions and the monitoring integrity (safety level) cannot be demonstrated. For example, a total darkness at night could impede the deployed cameras to provide useable images of the level crossing, making it impossible to monitor the level crossing. To overcome these limitations, it is known to equip the level crossing with sources of light in order to provide the required lighting to take usable images in the visible portion of the wavelength spectrum. The deployment of light sources yet entails additional costs related to power consumption and maintenance work, and the monitoring integrity (safety level) demonstration cannot be achieved either.

Another known solution to monitor a level crossing relies on mechanical systems to check the status of the barriers of the level crossing. Such mechanical systems include, for example and without limitations, inclinometers fitted on the barrier and/or encoders attached to the LX barrier axis. However, this solution is not compatibility with the detection of the barrier integrity (completeness) status.

Thus, there is a need for an enhanced device for monitoring a level crossing barrier.

## SUMMARY

To address these and other problems, there is provided a detection device for determining one or more parameters of a barrier of a level crossing, comprising:

- an imaging unit, the imaging unit comprising a first imaging module configured to acquire two-dimensional (2D) images of a first scene according to a first plurality of acquisition parameters, the first imaging module storing intrinsic and extrinsic parameters, each of the 2D images comprising a 2D arrangement of pixels, the imaging unit further comprising a second imaging module configured to acquire a three-dimensional (3D) cloud of points of a second scene according to a second plurality of acquisition parameters, the first and the second scene comprising the barrier of the level crossing;
- a database configured to store a position of the barrier of the level crossing in a given used coordinate system;
- a processing unit configured to:

    ■ receive a 2D image and a 3D cloud of points simultaneously acquired by the first and by the second imaging module, respectively;
    ■ detect in the 2D image a set of pixels representing the barrier of the level crossing;
    ■ synthetize a virtual 2D image from a set of points of the 3D cloud of points using the intrinsic and extrinsic parameters of the first imaging module, the virtual 2D image comprising a 2D arrangement of pixels and being synthetized according to the first plurality of acquisition parameters so that a plurality of pixels of the virtual 2D image corresponds to the set of pixels of the 2D image representing the barrier of the level crossing;
    ■ merge the 2D image with the virtual 2D image, which provides an enhanced 2D image;
    ■ determine one or more parameters of the barrier of the level crossing from the enhanced 2D image.

In one embodiment, the database may be further configured to store coordinates of a 3D barrier movement envelope within which the barrier of the level crossing moves, the processing unit being configured to synthetize the virtual 2D image from the set of points of the 3D cloud of points that are located inside the 3D barrier movement envelope.

In some embodiments, the processing unit may be configured to synthetize the virtual 2D image from the set of the 3D cloud of points, the synthetization of the virtual 2D image comprising:

- A projection of the set of 3D cloud of points on a 2D plan representing a focal plane of the first imaging module;
- A removal from the projected points of one or more points representing occulted objects with respect to the first imaging module;
- An interpolation of the remaining projected points to synthetize the virtual 2D image, each pixel of the virtual 2D image corresponding to a pixel of the 2D image.

In one embodiment, the processing unit may be further configured to:

- synthetize a virtual 3D cloud of points from the 2D image acquired by the first imaging module, the virtual 3D cloud of points being synthetized according to the second plurality of acquisition parameters;
- merge the 3D cloud of points with the virtual 3D cloud of points, thus obtaining an enhanced 3D cloud of points;
- determine one or more parameters of the barrier of the level crossing from the enhanced 3D cloud of points.

In one embodiment, the first imaging module may be configured to acquire the 2D images in the visible portion of the electromagnetic spectrum.

In some embodiments, a color may be assigned to each point of the 3D cloud of points depending on one or more assigned values.

The one or more parameters of the barrier of the level crossing may comprise a barrier position parameter, the processing unit being configured to determine the barrier position parameter by measuring an angle between a current position of the barrier and a reference position of the barrier.

In some embodiments, the one or more parameters of the barrier of the level crossing may further comprise a barrier movement parameter, the processing unit being configured to determine the barrier movement parameters by comparing the current position of the barrier to at least one previous position of the barrier with reference to time.

The one or more parameters of the barrier of the level crossing may further comprise an integrity parameter, the processing unit being configured to determine the integrity parameters by comparing a length of the barrier as measured within the 3D barrier movement envelope with a length of the barrier as measured without considering the 3D barrier movement envelope.

The processing unit may be configured to detect in the 2D image the set of pixels representing the barrier of the level crossing by applying a machine learning algorithm on the pixels of the 2D image.

There is further provided a method for determining one or more parameters of a barrier of a level crossing, the method comprising the steps of:

- acquiring two-dimensional (2D) images of a first scene according to a first plurality of acquisition parameters, each of the 2D images comprising a 2D arrangement of pixels, said step of acquiring 2D images further comprising storing intrinsic and extrinsic parameters, and acquire a three-dimensional (3D) cloud of points of a second scene according to a second plurality of acquisition parameters, the first and the second scene comprising the barrier of the level crossing;
- storing a position of the barrier of the level crossing in a given used coordinate system;
- detecting in the 2D image a set of pixels representing the barrier of the level crossing ;
- synthetizing a virtual 2D image from a set of points of the 3D cloud of points using said intrinsic and extrinsic parameters, the virtual 2D image comprising a 2D arrangement of pixels and being synthetized according to the first plurality of acquisition parameters so that a plurality of pixels of the virtual 2D image corresponds to the set of pixels of the 2D image representing the barrier of the level crossing;
- merging the 2D image with the virtual 2D image, which provides an enhanced 2D image; and
- determining one or more parameters of the barrier of the level crossing from the enhanced 2D image.

**BRIEF DESCRIPTION OF THE DRAWINGS**

The accompanying drawings, which are incorporated in and constitute a part of this specification, illustrate various embodiments of the invention and, together with the general description of the invention given above, and the detailed description of the embodiments given below, serve to explain the embodiments of the invention.

Figure 1 represents a monitoring system deployed in a level crossing, according to some embodiments of the invention;
Figure 2 schematically illustrates the structure of a detection device deployed in or near a level crossing, according to some embodiments of the invention; and
Figure 3 is a flowchart illustrating a method for determining one or more parameters of a barrier of a level crossing, in accordance with an embodiment of the invention.

## DETAILED DESCRIPTION

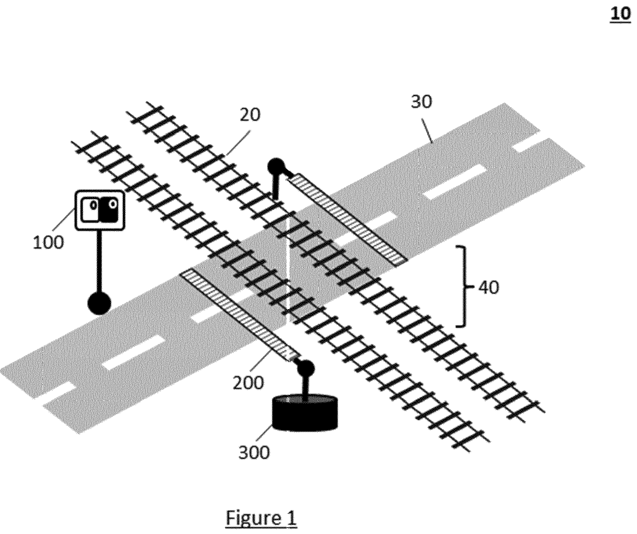

Figure 1 shows a monitoring system 10 deployed in a level crossing 40, according to some embodiments of the invention. The level crossing 40 represents an intersection area of two paths belonging to two different transport networks 20, 30. Examples of transport networks 20, 30 include, but are not limited to, railway networks, road networks and bikeway networks. The level crossing 40 may for example represent an intersection area where the tracks of a railway network cross a road or a path belonging to a road network.

The monitoring system 10 comprises one or more barriers 200 that may be used to control the access to the level crossing 40 for associated vehicles running on one of the involved transport networks 20, 30. Each of the barriers 200 may be subject to a rotation movement and be associated with three possible states with respect to the associated vehicles, comprising: a closed barrier state, an open barrier state, and a moving barrier state. In some embodiments, each barrier 200 may be further associated with an additional state corresponding to a non-integral state.

While a closed barrier blocks the access to the level crossing 40 for the associated vehicles, an opened barrier allows the associated vehicles to cross the level crossing 40. A moving barrier refers to the state between the open state and the closed state. A barrier is in a non-integral state if the barrier has been degraded, for example vandalized or broken. The monitoring system 10 comprises a control unit 300 that is configured to control the state of one or more barriers 200 deployed in the level crossing 40. For example, the control unit 300 may be configured to change the state of a barrier 200 of a level crossing 40 from an open state to a closed state when a railway vehicle, e.g. a train or a subway, is approaching. In some embodiments of the invention, the level crossing 40 further comprises warning devices such as crossing lights and/or electric bells that may be activated before, during and/or after switching the state of one or more barriers 200 of the level crossing 40. In such embodiments, the control unit 300 is configured to activate the warning devices.

The monitoring system 10 further comprises a detection device 100 comprising one or more imaging modules. Each of the imaging modules has a field of view that may be static over time or adjustable. Advantageously, the field of view of each imaging module may be chosen in a way to encompass one or more barriers 200 of the level crossing 40. For example, each imaging module of the detection device 100 may be configured so that its corresponding field of view encompasses all the barriers 200 of the level crossing 40. Alternatively, one or more imaging modules of the detection device 100 may be configured so that their corresponding fields of view encompass, at a given time, a single barrier 200 of the level crossing 40. Further, the detection device 100 is configured to determine one or more parameters of each barrier 200 of the level crossing 40 by using data acquired by means of the imaging modules.

In some embodiments of the invention, the monitoring system 10 further comprises one or more sources of light that may be controlled by the detection device 100. For example, each source of light may be associated with one imaging unit **110** and configured to illuminate the field of view of the corresponding imaging unit **110.** Further, each source of light may be activated only to allow acquiring data by the corresponding imaging unit **110.**

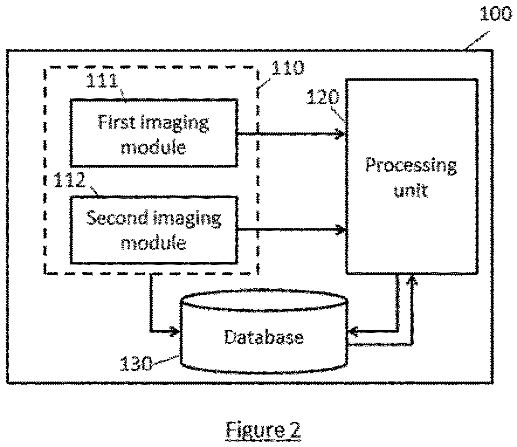

Figure 2 schematically illustrates the structure of a detection device 100 deployed in or near a level crossing 40, according to some embodiments of the invention. The detection device 100 comprises an imaging unit **110** oriented towards a barrier 200 of the level crossing 40. The imaging unit **110** comprises a first imaging module **111,** the first imaging module 111 being configured to acquire two-dimensional (2D) images of a first scene according to a first plurality of acquisition parameters, each of the 2D images comprising a 2D arrangement of pixels. The first plurality of acquisition parameters comprises, for example and without limitation, an observation point, a field of view and a line of sight. Further, the first scene captured by the first imaging module **111** may comprise a barrier 200 of interest deployed in the level crossing 40.

In one embodiment of the invention, the first imaging module **111** may be configured to acquire the 2D images in the visible portion of the electromagnetic spectrum.

In another embodiment of the invention, the first imaging module **111** may be configured to acquire the 2D images in a range of the electromagnetic spectrum that includes the visible portion and/or the infrared portion.

The imaging unit 110 further comprises a second imaging module 112, the second imaging module 112 being configured to acquire a three-dimensional (3D) cloud of points of a second scene according to a second plurality of acquisition parameters. The second plurality of acquisition parameters comprises, for example and without limitation, an observation point, a field of view and a plurality of lines of sight. Further, the second scene captured by the second imaging module 112 may comprise the barrier 200 of interest deployed in the level crossing 40. Each of the points of the 3D cloud of points may be assigned to one or more values depending on the detection technique implemented in the second imaging module 112. The second imaging module 112 may, for example an without limitation, be a LiDAR (Light Detection and Ranging) module capable of scanning a given area by sequentially emitting laser beams along different lines of sight and by detecting the returned portion of the emitted beams. Thus, a point of a 3D cloud of points may be obtained by comparing the emitted beam with the corresponding returned beam. The values assigned to such a point may, for example and without limitation, include the time of flight (ToF), the intensity of returned beam, and so on.

In some embodiments of the invention, a color may be assigned to each point of the 3D cloud of points depending on one or more values assigned to the considered point.

The detection device 100 may comprise a database 130 configured to store a position in a given coordinate system of the barrier 200 of interest of the level crossing 40. Given the rotational movement of a barrier 200 of a level crossing 40, the database 130 may be also configured to store the possible positions of the barrier 200 of interest when changing from a closed state to an open state or vice versa.

In some embodiments of the invention, the barrier 200 of interest of the level crossing 40 may be subject to translational movements which may be caused, for example and without limitation, by the wind or by an accident. In such embodiments, the database 130 may be configured to store a 3D barrier 200 movement envelope within which the barrier 200 of interest of the level crossing 40 moves.

The detection device 100 further comprises a processing unit 120, the processing unit 120 being configured to determine one or more parameters of the barrier 200 of interest by processing 2D images and 3D cloud of points, respectively, provided by the first 111 and by the second imaging module 112 of the imaging unit 110. More precisely, the processing unit 120 may be configured, at a given moment in time, to receive a 2D image and a 3D cloud of points simultaneously acquired by the first and by the second imaging module 111 and 112, respectively, the 2D image and the 3D cloud of points being acquired with respect to a common barrier 200 of interest of the level crossing 40.

The processing unit 120 may further be configured to detect in the received 2D image a set of pixels representing the barrier 200 of interest of the level crossing 40. In some embodiments of the invention, the detection of such a set of pixels by the processing unit 120 may be carried out by making use of one or more characteristics of the barrier 200 of interest such as its color, its shape and/or its geometric dimensions. In other embodiments of the invention, the processing unit 120 may be configured to detect the set of pixels representing the barrier 200 of interest by applying a machine learning algorithm on the pixels of the 2D image. The parameters of the machine learning algorithm may be optimized beforehand using real-world and/or synthetized 2D images. Examples of machine learning algorithms include, but are not limited to, linear regression, logistic regression, decision tree, K-means, etc.

The processing unit 120 may further be configured to synthetize a virtual 2D image from the received 3D cloud of points, the virtual 2D image comprising a 2D arrangement of pixels. Further, the virtual 2D image may be synthetized by the processing unit 120 according to the first plurality of acquisition parameters of the corresponding 2D image acquired by the first imaging module 111. For example, the virtual 2D image may be synthetized according to the same observation point, the same field of view and the same line of sight as the corresponding 2D image. To perform the synthetization, the processing may be configured to access and use intrinsic and extrinsic parameters associated with the first imaging module 111. In some embodiments, intrinsic and extrinsic parameters of the first imaging module 111 may be obtained by calibration. In some embodiments, intrinsic parameters may be received by the system (for example they may be set by the first imaging module supplier). The intrinsic parameters may be represented by a matrix. The matrix associated with the intrinsic parameters provides a mapping relation between the position of an object in the real world (for example in camera 3D coordinates) and the position (for example pixels) of the object on the image (for example in pixel 2D coordinates). The intrinsic matrix K may be represented as follows:

$$K = \begin{bmatrix} f_x & 0 & c_x & 0 \\ 0 & f_y & c_y & 0 \\ 0 & 0 & 1 & 0 \end{bmatrix}$$

In the intrinsic matrix K, $f_x$ and $f_y$ respectively represent the horizontal and the vertical focal lengths in pixels, and $(c_x, c_y)$ represents the position in pixels of the optical center in the image.

The extrinsic parameters are also represented by a matrix. The matrix associated with the extrinsic parameters provides a mapping relation between the position of an object in the real world (for example in world 3D coordinates) and the position (for example pixels) of the object on the image (for example in pixel 2D coordinates). The extrinsic matrix T may be represented as follows:

$$T = \begin{bmatrix} r_{11} & r_{12} & r_{13} & t_x \\ r_{21} & r_{22} & r_{23} & t_y \\ r_{31} & r_{32} & r_{33} & t_z \\ 0 & 0 & 0 & 1 \end{bmatrix}$$

In the intrinsic matrix T, [R] designates a rotation matrix (for three rotation angles) and {t} defines a translation vector (with three components).

The calibration of the extrinsic parameters may be performed using a LiDAR, which provides the relative position (shifting and rotation) to the LiDAR as a reference to the world coordinates.

In some embodiments of the invention, the processing unit 120 may be configured to synthetize the virtual 2D image so that each pixel of the virtual 2D image corresponds to a pixel of the corresponding 2D image as acquired by the first imaging module **111.** This means that two corresponding pixels of the virtual 2D image and the 2D image as acquired by the first imaging module **111** relate to a same location.

In one embodiment of the invention, the processing unit 120 may be configured to compute each pixel of the virtual image from one point of the 3D cloud of points. In such an embodiment, the color assigned to the considered pixel may be the color assigned to the associated point, i.e. the color obtained from one or more value of the associated point.

In another embodiment of the invention, the processing unit 120 may be configured to compute each pixel of the virtual image from one or more points of the 3D cloud of point. In such an embodiment, the color assigned to the considered pixel may be obtained, for example and without limitation, by merging the colors assigned to the one or more associated points.

The processing unit 120 may further be configured to merge the 2D image as acquired by the first imaging module **111** with the corresponding synthetized virtual 2D image, thus obtaining an enhanced 2D image. The enhanced 2D image represents an enhanced 2D representation of the level crossing 40. More precisely, each pixel of the enhanced 2D image may be obtained by merging two corresponding pixels in the merged images. In some embodiments of the invention, the processing unit 120 may be configured, when a pixel in one of the merged images is missing, to compute the corresponding pixel in the enhanced image by treating the missing pixel as transparent pixel.

In some embodiments of the invention, the processing unit 120 may be configured to synthetize the virtual 2D image from the 3D cloud of points by implementing the steps consisting in:

- projecting the 3D cloud of points on a 2D plan representing a focal plane of the first imaging module **111;**

- removing from the projected points one or more points representing occulted objects with respect to the first imaging module **111 ;**

- interpolating the remaining projected points to synthetize the virtual 2D image, each pixel of the virtual 2D image corresponding to a pixel of the 2D image as acquired by the first imaging module 111.

In other embodiments of the invention, the processing unit 120 may be configured to synthetize the virtual 2D image by only considering points of the 3D cloud of points that are located inside the 3D barrier 200 movement envelope.

In some embodiments of the invention, the processing unit 120 may be configured to synthetize a virtual 3D cloud of points from the received 2D image as acquired by the first imaging module 111. Further, the virtual 3D cloud of points may be synthetized by the processing unit 120 according to the second plurality of acquisition parameters of the corresponding 3D cloud of points acquired by the second imaging module 112. For example, the processing unit 120 may be configured to synthetize the virtual 3D cloud of points so that each point of the virtual 3D cloud of points corresponds to a point of the corresponding 3D cloud of points as acquired by the second imaging module 112. This means that two corresponding points of the virtual 3D cloud of points and the 3D cloud of points as acquired by the second imaging module 112 relate to a same location. In such embodiments, the processing unit 120 may further be configured to merge 3D cloud of points as acquired by the second imaging module 112 with the corresponding synthetized virtual 3D cloud of points, thus obtaining an enhanced 3D cloud of points. The enhanced 3D cloud of points represents an enhanced 3D representation of the level crossing 40.

The processing unit 120 may further be configured to determine one or more parameters of the barrier 200 of interest from at least one of the enhanced representations of the level crossing 40. For example, the processing unit 120 may be configured to determine a barrier 200 position parameter by measuring an angle between a current position of the barrier 200 as determined from at least one of the enhanced representations of the level crossing 40 and a reference position of the barrier 200 as stored in the database 130. The reference position of the barrier 200 may, for example and without limitation, corresponds to a closed state or to an open state of the barrier 200 of interest of the level crossing 40.

In some embodiments of the invention, the processing unit 120 may further be configured to determine a barrier 200 movement parameter from one of the enhanced representations of the level crossing 40 and a corresponding previously determined enhanced representation, the current and the previous representation being sequentially determined by the processing unit 120 with respect to two successive moments in time. For example, the barrier 200 movement parameter may be determined by comparing the current position of the barrier 200 to a previous position of the barrier 200 with reference to time.

In other embodiments of the invention, the processing unit 120 may further be configured to determine a barrier 200 integrity parameter from at least the enhanced 3D representation of the level crossing 40. The barrier 200 integrity parameter may be determined by the processing unit 120 by comparing a length of the barrier 200 as measured within the 3D barrier 200 movement envelope with a length of the barrier 200 as measured without considering the 3D barrier 200 movement envelope.

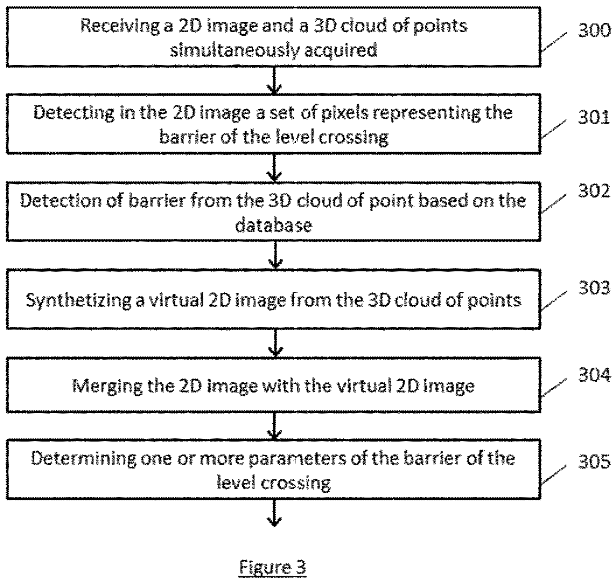

Figure 3 is a flowchart illustrating a method for determining one or more parameters of a barrier 200 of interest of a level crossing 40, in accordance with an embodiment of the invention.

At step 300, a 2D image and a 3D cloud of points may be simultaneously received, the 2D image and the 3D cloud of points being acquired by a first and by a second imaging module 112, respectively. The first imaging module 111 may acquire the 2D image according to a first plurality of acquisition parameters. Similarly, the second imaging module 112 may acquire the 3D cloud of points according to a second plurality of acquisition parameters.

At step 301, a set of pixels representing the barrier 200 of interest of the level crossing 40 may be detected in the 2D image. The detection of such a set of pixels may be achieved by applying a machine learning algorithm on the pixels of the 2D image. The parameters of the machine learning algorithm may be optimized beforehand using real-world and/or synthetized 2D images. Exemplary machine learning algorithms include, without limitation, linear regression, logistic regression, decision tree, K-means, etc.

At step 302, the barrier 200 of interest may be detected from the 3D cloud of points based on the data stored in the database 130.

At step 303, a virtual 2D image may be synthetized from the 3D cloud of points. The step of synthetizing a virtual 2D image from the set of points of the 3D cloud of points is implemented by synthetizing the virtual 2D image on the pixels represented the barrier (as detected in the detection step 301).

The virtual 2D image may be synthetized according to the first plurality of acquisition parameters of the corresponding 2D image acquired by the first imaging module 111. Step 303 may further comprise synthetizing a virtual 3D cloud of points from the 2D image according to the second plurality of acquisition parameters of the corresponding 3D cloud of points acquired by the second imaging module 112.

At step 304, the 2D image, as acquired by the first imaging module 111 and the corresponding synthetized virtual 2D image, may be merged, thereby obtaining an enhanced 2D image which represents an enhanced 2D representation of the level crossing 40. Step 304 may further comprise merging the 3D cloud of points as acquired by the second imaging module 112 and the corresponding synthetized virtual 3D cloud of points, thereby obtaining an enhanced 3D cloud of points which represents an enhanced 3D representation of the level crossing 40.

At step 305, one or more parameters of the barrier 200 of interest of the level crossing 40 may be determined from at least one of the enhanced representations of the level crossing 40. The one or more parameters include, for example and without limitation, a barrier position parameter, a barrier movement parameter and a barrier integrity parameter.

It should be noted that the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

While embodiments of the invention have been illustrated by a description of various examples, and while these embodiments have been described in considerable detail, it is not the intent of the applicant to restrict or in any way limit the scope of the appended claims to such detail. Additional advantages and modifications will readily appear to those skilled in the art. The invention in its broader aspects is therefore not limited to the specific details, representative methods, and illustrative examples shown and described.

**Claims**

1. **A detection** device (100) for determining one or more parameters of a barrier (200) of a level crossing (40), comprising:

- an imaging unit (110), the imaging unit (110) comprising a first imaging module (111) configured to acquire two-dimensional (2D) images of a first scene according to a first plurality of acquisition parameters, the first imaging module (111) storing intrinsic and extrinsic parameters, each of the 2D images comprising a 2D arrangement of pixels, the imaging unit (110) further comprising a second imaging module (112) configured to acquire a three-dimensional (3D) cloud of points of a second scene according to a second plurality of acquisition parameters, the first and the second scene comprising the barrier (200) of the level crossing (40);
- a database (130) configured to store a position of the barrier (200) of the level crossing (40) in a given used coordinate system;
- a processing unit (120) configured to:

○ receive a 2D image and a 3D cloud of points simultaneously acquired by the first and by the second imaging module (112), respectively;
○ detect in the 2D image a set of pixels representing the barrier (200) of the level crossing (40);
○ detecting the barrier (200) from the 3D cloud of points based on the data stored in said database;
○ synthetize a virtual 2D image from a set of points of the 3D cloud of points using the intrinsic and extrinsic parameters of the first imaging module (111), the virtual 2D image comprising a 2D arrangement of pixels and being synthetized according to the first plurality of acquisition parameters so that a plurality of pixels of the virtual 2D image corresponds to the set of pixels of the 2D image representing the barrier (200) of the level crossing (40);

○ merge the 2D image with the virtual 2D image, which provides an enhanced 2D image;

○ **determine** one or more parameters of the barrier (200) of the level crossing (40) from the enhanced 2D image and from the data stored in said database.

2. The detection device (100) of claim 1, wherein the database (130) is further configured to store coordinates of a 3D barrier (200) movement envelope within which the barrier (200) of the level crossing (40) moves, the processing unit (120) being configured to synthetize the virtual 2D image from the set of points of the 3D cloud of points that are located inside the 3D barrier (200) movement envelope.

3. The detection device (100) as claimed in one of the preceding claims, wherein the processing unit (120) is configured to synthetize the virtual 2D image from the set of the 3D cloud of points, the synthetization of the virtual 2D image comprising:

- A projection of the set of 3D cloud of points on a 2D plan representing a focal plane of the first imaging module (111);
- A removal from the projected points of one or more points representing occulted objects with respect to the first imaging module (111);
- An interpolation of the remaining projected points to synthetize the virtual 2D image, each pixel of the virtual 2D image corresponding to a pixel of the 2D image.

4. The detection device (100) as claimed in one of the preceding claims, wherein the processing unit (120) is further configured to:

- synthetize a virtual 3D cloud of points from the 2D image acquired by the first imaging module (111), the virtual 3D cloud of points being synthetized according to the second plurality of acquisition parameters ;
- merge the 3D cloud of points with the virtual 3D cloud of points, thus obtaining an enhanced 3D cloud of points;
- determine one or more parameters of the barrier (200) of the level crossing (40) from the enhanced 3D cloud of points.

5. The detection device (100) as claimed in one of the preceding claims, wherein the first imaging module (111) is configured to acquire the 2D images in the visible portion of the electromagnetic spectrum.

6. The detection device (100) as claimed in one of the preceding claims, wherein a color is assigned to each point of the 3D cloud of points depending on one or more assigned values.

7. The detection device (100) as claimed in one of the preceding claims, wherein the one or more parameters of the barrier (200) of the level crossing (40) comprise a barrier (200) position parameter, the processing unit (120) being configured to determine the barrier (200) position parameter by measuring an angle between a current position of the barrier (200) and a reference position of the barrier.

8. The detection device (100) as claimed in claim 7, wherein the one or more parameters of the barrier (200) of the level crossing (40) further comprise a barrier (200) movement parameter, the processing unit (120) being configured to determine the barrier (200) movement parameters by comparing the current position of the barrier (200) to at least one previous position of the barrier (200) with reference to time.

9. The detection device (100) as claimed in claims 2 and 7, wherein the one or more parameters of the barrier (200) of the level crossing (40) further comprise an integrity parameter, the processing unit (120) being configured to determine the integrity parameters by comparing a length of the barrier (200) as measured within the 3D barrier (200) movement envelope with a length of the barrier (200) as measured without considering the 3D barrier (200) movement envelope.

10. The detection device (100) as claimed in one of the preceding claims, wherein the processing unit (120) is configured to detect in the 2D image the set of pixels representing the barrier (200) of the level crossing (40) by applying a machine learning algorithm on the pixels of the 2D image.

11. **A** method for determining one or more parameters of a barrier (200) of a level crossing (40), the method comprising the steps of:

- acquiring (301) two-dimensional (2D) images of a first scene according to a first plurality of acquisition parameters, each of the 2D images comprising a 2D arrangement of pixels, said step of acquiring 2D images further comprising storing intrinsic and extrinsic parameters, and acquire a three-dimensional (3D) cloud of points of a second scene according to a second plurality of acquisition parameters, the first and the second scene comprising the barrier (200) of the level crossing (40);
- storing a position of the barrier (200) of the level crossing (40) in a given used coordinate system;
- detecting (302) in the 2D image a set of pixels representing the barrier (200) of the level crossing (40);
- detecting the barrier (200) from the 3D cloud of points based on the data stored in said database;
- synthetizing (303) a virtual 2D image from a set of points of the 3D cloud of points using said intrinsic and extrinsic parameters, the virtual 2D image comprising a 2D arrangement of pixels and being synthetized according to the first plurality of acquisition parameters so that a plurality of pixels of the virtual 2D image corresponds to the set of pixels of the 2D image representing the barrier (200) of the level crossing (40);
- merging (304) the 2D image with the virtual 2D image, which provides an enhanced 2D image; and
- determining (305) one or more parameters of the barrier (200) of the level crossing (40) from the enhanced 2D image and from the data stored in said database.

**Patentansprüche**

1. Detektionsvorrichtung (100) zum Bestimmen eines oder mehrerer Parameter einer Schranke (200) eines Bahnübergangs (40), umfassend:

- eine Bildgebungseinheit (110), wobei die Bildgebungseinheit (110) ein erstes Bildgebungsmodul (111) umfasst, das dazu konfiguriert ist, zweidimensionale (2D) Bilder einer ersten Szene gemäß einer ersten Vielzahl von Aufnahmeparametern aufzunehmen, wobei das erste Bildgebungsmodul (111) intrinsische und extrinsische Parameter speichert, wobei jedes der 2D-Bilder eine 2D-Anordnung von Pixeln umfasst, wobei die Bildgebungseinheit (110) ferner ein zweites Bildgebungsmodul (112) umfasst, das dazu konfiguriert ist, eine dreidimensionale (3D) Punktwolke einer zweiten Szene gemäß einer zweiten Vielzahl von Aufnahmeparametern aufzunehmen, wobei die erste und die zweite Szene die Schranke (200) des Bahnübergangs (40) umfassen;
- eine Datenbank (130), die dazu konfiguriert ist, eine Position der Schranke (200) des Bahnübergangs (40) in einem bestimmten verwendeten Koordinatensystem zu speichern;
- eine Verarbeitungseinheit (120), die konfiguriert ist zum:

- Empfangen eines 2D-Bilds und einer 3D-Punktwolke, die gleichzeitig vom ersten bzw. vom zweiten Bildgebungsmodul (112) aufgenommen wurden;
- Erfassen im 2D-Bild einer Menge von Pixeln, die die Schranke (200) des Bahnübergangs (40) darstellen;
- Erfassen der Schranke (200) aus der 3D-Punktwolke basierend auf den in der Datenbank gespeicherten Daten;
- Synthetisieren eines virtuellen 2D-Bilds aus einer Menge von Punkten der 3D-Punktwolke unter Verwendung der intrinsischen und extrinsischen Parameter des ersten Bildgebungsmoduls (111), wobei das virtuelle 2D-Bild eine 2D-Anordnung von Pixeln umfasst und gemäß der ersten Vielzahl von Aufnahmeparametern synthetisiert wird, sodass eine Vielzahl von Pixeln des virtuellen 2D-Bilds der Menge von Pixeln des 2D-Bilds entspricht, die die Schranke (200) des Bahnübergangs (40) darstellen;
- Zusammenführen des 2D-Bilds mit dem virtuellen 2D-Bild, wodurch ein verbessertes 2D-Bild bereitgestellt wird;
- Bestimmen eines oder mehrerer Parameter der Schranke (200) des Bahnübergangs (40) aus dem verbesserten 2D-Bild und aus den in der Datenbank gespeicherten Daten.

2. Detektionsvorrichtung (100) nach Anspruch 1, wobei die Datenbank (130) ferner dazu konfiguriert ist, Koordinaten einer 3D-Bewegungshüllkurve der Schranke (200) zu speichern, innerhalb derer sich die Schranke (200) des Bahnübergangs (40) bewegt, wobei die Verarbeitungseinheit (120) dazu konfiguriert ist, das virtuelle 2D-Bild aus der Menge von Punkten der 3D-Punktwolke zu synthetisieren, die sich innerhalb der 3D-Bewegungshüllkurve der Schranke (200) befinden.

3. Detektionsvorrichtung (100) nach einem der vorstehenden Ansprüche, wobei die Verarbeitungseinheit (120) dazu konfiguriert ist, das virtuelle 2D-Bild aus der Menge der 3D-Punktwolke zu synthetisieren, wobei die Synthese des virtuellen 2D-Bilds Folgendes umfasst:

- eine Projektion der Menge der 3D-Punktewolke auf eine 2D-Ebene, die eine Brennebene des ersten Bildgebungsmoduls (111) darstellt;
- eine Entfernung eines oder mehrerer Punkte aus den projizierten Punkten, die verdeckte Objekte in Bezug auf das erste Bildgebungsmodul (111) darstellen;
- eine Interpolation der verbleibenden projizierten Punkte, um das virtuelle 2D-Bild zu synthetisieren, wobei jedes Pixel des virtuellen 2D-Bilds einem Pixel des 2D-Bildes entspricht.

4. Detektionsvorrichtung (100) nach einem der vorstehenden Ansprüche, wobei die Verarbeitungseinheit (120) ferner konfiguriert ist zum:

- Synthetisieren einer virtuellen 3D-Punktwolke aus dem vom ersten Bildgebungsmodul (111) aufgenommenen 2D-Bild, wobei die virtuelle 3D-Punktwolke gemäß der zweiten Vielzahl von Aufnahmeparametern synthetisiert wird;
- Zusammenführen der 3D-Punktwolke mit der virtuellen 3D-Punktwolke, wodurch eine verbesserte 3D-Punktwolke erhalten wird;
- Bestimmen eines oder mehrerer Parameter der Schranke (200) des Bahnübergangs (40) aus der verbesserten 3D-Punktwolke.

5. Detektionsvorrichtung (100) nach einem der vorstehenden Ansprüche, wobei das erste Bildgebungsmodul (111) dazu konfiguriert ist, die 2D-Bilder im sichtbaren Bereich des elektromagnetischen Spektrums aufzunehmen.

6. Detektionsvorrichtung (100) nach einem der vorstehenden Ansprüche, wobei jedem Punkt der 3D-Punktwolke abhängig von einem oder mehreren zugewiesenen Werten eine Farbe zugewiesen wird.

7. Detektionsvorrichtung (100) nach einem der vorstehenden Ansprüche, wobei der eine oder die mehreren Parameter der Schranke (200) des Bahnübergangs (40) einen Positionsparameter der Schranke (200) umfassen, wobei die Verarbeitungseinheit (120) dazu konfiguriert ist, den Positionsparameter der Schranke (200) durch Messen eines Winkels zwischen einer aktuellen Position der Schranke (200) und einer Referenzposition der Schranke zu bestimmen.

8. Detektionsvorrichtung (100) nach Anspruch 7, wobei der eine oder die mehreren Parameter der Schranke (200) des Bahnübergangs (40) ferner einen Bewegungsparameter der Schranke (200) umfassen, wobei die Verarbeitungseinheit (120) dazu konfiguriert ist, die Bewegungsparameter der Schranke (200) durch Vergleichen der aktuellen Position der Schranke (200) mit mindestens einer vorherigen Position der Schranke (200) in Bezug auf die Zeit zu bestimmen.

9. Detektionsvorrichtung (100) nach den Ansprüchen 2 und 7, wobei der eine oder die mehreren Parameter der Schranke (200) des Bahnübergangs (40) ferner einen Integritätsparameter umfassen, wobei die Verarbeitungseinheit (120) dazu konfiguriert ist, die Integritätsparameter durch Vergleichen einer Länge der Schranke (200), innerhalb der 3D-Bewegungshüllkurve der Schranke (200) gemessen, mit einer Länge der Schranke (200), ohne Berücksichtigung der 3D-Bewegungshüllkurve der Schranke (200) gemessen, zu bestimmen.

10. Detektionsvorrichtung (100) nach einem der vorstehenden Ansprüche, wobei die Verarbeitungseinheit (120) dazu konfiguriert ist, in dem 2D-Bild die Menge von Pixeln, die die Barriere (200) des Bahnübergangs (40) darstellen, durch Anwenden eines maschinellen Lernalgorithmus auf die Pixel des 2D-Bilds zu erfassen.

11. Verfahren zum Bestimmen eines oder mehrerer Parameter einer Schranke (200) eines Bahnübergangs (40), wobei das Verfahren die folgenden Schritte umfasst:

- Aufnehmen (301) zweidimensionaler (2D) Bilder einer ersten Szene gemäß einer ersten Vielzahl von Aufnahmeparametern, wobei jedes der 2D-Bilder eine 2D-Anordnung von Pixeln umfasst, wobei der Schritt zum Aufnehmen von 2D-Bildern ferner Speichern intrinsischer und extrinsischer Parameter und Aufnehmen einer dreidimensionalen (3D) Punktwolke einer zweiten Szene gemäß einer zweiten Vielzahl von Aufnahmeparametern umfasst, wobei die erste und die zweite Szene die Schranke (200) des Bahnübergangs (40) umfassen;
- Speichern einer Position der Schranke (200) des Bahnübergangs (40) in einem bestimmten verwendeten Koordinatensystem;
- Erfassen (302) im 2D-Bild einer Menge von Pixeln, die die Schranke (200) des Bahnübergangs (40) darstellen;
- Erfassen der Schranke (200) aus der 3D-Punktwolke basierend auf den in der Datenbank gespeicherten Daten;
- Synthetisieren (303) eines virtuellen 2D-Bilds aus einer Menge von Punkten der 3D-Punktwolke unter Verwendung der intrinsischen und extrinsischen Parameter, wobei das virtuelle 2D-Bild eine 2D-Anordnung von Pixeln umfasst und gemäß der ersten Vielzahl von Aufnahmeparametern synthetisiert wird, sodass eine Vielzahl von Pixeln des virtuellen 2D-Bilds der Menge von Pixeln des 2D-Bilds entspricht, die die Schranke (200) des Bahnübergangs (40) darstellen;
- Zusammenführen (304) des 2D-Bilds mit dem virtuellen 2D-Bild, wodurch ein verbessertes 2D-Bild bereitgestellt wird; und
- Bestimmen (305) eines oder mehrerer Parameter der Schranke (200) des Bahnübergangs (40) aus dem verbesserten 2D-Bild und aus den in der Datenbank gespeicherten Daten.

**Revendications**

1. Dispositif de détection (100) pour déterminer un ou plusieurs paramètres d'une barrière (200) d'un passage à niveau (40), comprenant :

   - une unité d'imagerie (110), l'unité d'imagerie (110) comprenant un premier module d'imagerie (111) configuré pour acquérir des images bidimensionnelles (2D) d'une première scène selon une première pluralité de paramètres d'acquisition, le premier module d'imagerie (111) stockant des paramètres intrinsèques et extrinsèques, chacune des images 2D comprenant un agencement 2D de pixels, l'unité d'imagerie (110) comprenant en outre un second module d'imagerie (112) configuré pour acquérir un nuage de points tridimensionnel (3D) d'une seconde scène selon une seconde pluralité de paramètres d'acquisition, la première et la seconde scène comprenant la barrière (200) du passage à niveau (40) ;
   - une base de données (130) configurée pour stocker une position de la barrière (200) du passage à niveau (40) dans un système de coordonnées utilisé donné ;
   - une unité de traitement (120) configurée pour :

     - recevoir une image 2D et un nuage de points 3D acquis simultanément par le premier et par le second module d'imagerie (112), respectivement ;
     - détecter dans l'image 2D un ensemble de pixels représentant la barrière (200) du passage à niveau (40) ;
     - détection de la barrière (200) à partir du nuage de points 3D sur la base des données stockées dans ladite base de données ;
     - synthétiser une image 2D virtuelle à partir d'un ensemble de points du nuage de points 3D en utilisant les paramètres intrinsèques et extrinsèques du premier module d'imagerie (111), l'image 2D virtuelle comprenant un agencement 2D de pixels et étant synthétisée selon la première pluralité de paramètres d'acquisition de sorte qu'une pluralité de pixels de l'image 2D virtuelle correspond à l'ensemble de pixels de l'image 2D représentant la barrière (200) du passage à niveau (40) ;
     - fusionner l'image 2D avec l'image 2D virtuelle, ce qui fournit une image 2D améliorée ;
     - déterminer un ou plusieurs paramètres de la barrière (200) du passage à niveau (40) à partir de l'image 2D améliorée et des données stockées dans ladite base de données.

2. Dispositif de détection (100) selon la revendication 1, dans lequel la base de données (130) est en outre configurée pour stocker des coordonnées d'une enveloppe de mouvement de barrière 3D (200) dans laquelle se déplace la barrière (200) du passage à niveau (40), l'unité de traitement (120) étant configurée pour synthétiser l'image virtuelle 2D à partir de l'ensemble des points du nuage de points 3D qui sont situés à l'intérieur de l'enveloppe de mouvement de barrière 3D (200).

3. Dispositif de détection (100) selon l'une des revendications précédentes, dans lequel l'unité de traitement (120) est configurée pour synthétiser l'image 2D virtuelle à partir de l'ensemble du nuage de points 3D, la synthèse de l'image 2D virtuelle comprenant :

   - une projection de l'ensemble de nuage de points 3D sur un plan 2D représentant un plan focal du premier module d'imagerie (111) ;
   - une suppression des points projetés d'un ou plusieurs points représentant des objets occultés par rapport au premier module d'imagerie (111) ;
   - une interpolation des points projetés restants pour synthétiser l'image 2D virtuelle, chaque pixel de l'image 2D virtuelle correspondant à un pixel de l'image 2D.

4. Dispositif de détection (100) selon l'une des revendications précédentes, dans lequel l'unité de traitement (120) est configurée pour :

   - synthétiser un nuage de points 3D virtuel à partir de l'image 2D acquise par le premier module d'imagerie (111), le nuage de points 3D virtuel étant synthétisé selon la seconde pluralité de paramètres d'acquisition ;
   - fusionner le nuage de points 3D avec le nuage de points 3D virtuel, obtenant ainsi un nuage de points 3D amélioré ;
   - déterminer un ou plusieurs paramètres de la barrière (200) du passage à niveau (40) à partir du nuage de points 3D amélioré.

5. Dispositif de détection (100) selon l'une des revendications précédentes, dans lequel le premier module d'imagerie (111) est configuré pour acquérir les images 2D dans la partie visible du spectre électromagnétique.

6. Dispositif de détection (100) selon l'une des revendications précédentes, dans lequel une couleur est attribuée à chaque point du nuage de points 3D en fonction d'une ou plusieurs valeurs attribuées.

7. Dispositif de détection (100) selon l'une des revendications précédentes, dans lequel les un ou plusieurs paramètres de la barrière (200) du passage à niveau (40) comprennent un paramètre de position de barrière (200), l'unité de traitement (120) étant configurée pour déterminer le paramètre de position de barrière (200) en mesurant un angle entre une position actuelle de la barrière (200) et une position de référence de la barrière.

8. Dispositif de détection (100) selon la revendication 7, dans lequel les un ou plusieurs paramètres de la barrière (200) du passage à niveau (40) comprennent en outre un paramètre de mouvement de barrière (200), l'unité de traitement (120) étant configurée pour déterminer les paramètres de mouvement de barrière (200) en comparant la position actuelle de la barrière (200) à au moins une position précédente de la barrière (200) par rapport au temps.

9. Dispositif de détection (100) selon les revendications 2 et 7, dans lequel les un ou plusieurs paramètres de la barrière (200) du passage à niveau (40) comprennent en outre un paramètre d'intégrité, l'unité de traitement (120) étant configurée pour déterminer les paramètres d'intégrité en comparant une longueur de la barrière (200) telle que mesurée dans l'enveloppe de mouvement 3D de la barrière (200) avec une longueur de la barrière (200) mesurée sans tenir compte de l'enveloppe de mouvement 3D de barrière (200).

10. Dispositif de détection (100) selon l'une des revendications précédentes, dans lequel l'unité de traitement (120) est configurée pour détecter dans l'image 2D l'ensemble de pixels représentant la barrière (200) du passage à niveau (40) en appliquant un algorithme d'apprentissage automatique sur les pixels de l'image 2D.

11. Procédé de détermination d'un ou plusieurs paramètres d'une barrière (200) d'un passage à niveau (40), le procédé comprenant les étapes de :

    - acquisition (301) des images bidimensionnelles (2D) d'une première scène selon une première pluralité de paramètres d'acquisition, chacune des images 2D comprenant un agencement 2D de pixels, ladite étape d'acquisition d'images 2D comprenant en outre le stockage de paramètres intrinsèques et extrinsèques et acquisition d'un nuage de points tridimensionnel (3D) d'une seconde scène selon une seconde pluralité de paramètres d'acquisition, la première et la seconde scène comprenant la barrière (200) du passage à niveau (40) ;
    - stockage d'une position de la barrière (200) du passage à niveau (40) dans un système de coordonnées utilisé donné ;
    - détection (302) dans l'image 2D d'un ensemble de pixels représentant la barrière (200) du passage à niveau (40) ;
    - détection de la barrière (200) à partir du nuage de points 3D sur la base des données stockées dans ladite base de données ;
    - synthétisation (303) d'une image 2D virtuelle à partir d'un ensemble de points du nuage de points 3D en utilisant lesdits paramètres intrinsèques et extrinsèques, l'image 2D virtuelle comprenant un agencement 2D de pixels et étant synthétisée selon la première pluralité de paramètres d'acquisition de sorte qu'une pluralité de pixels de l'image 2D virtuelle correspond à l'ensemble de pixels de l'image 2D représentant la barrière (200) du passage à niveau (40) ;
    - fusionnement (304) de l'image 2D avec l'image 2D virtuelle, ce qui fournit une image 2D améliorée ; et
    - détermination (305) d'un ou plusieurs paramètres de la barrière (200) du passage à niveau (40) à partir de l'image 2D améliorée et des données stockées dans ladite base de données.

Figure 1

Figure 2

```
┌─────────────────────────────────────────────────────┐
│   Receiving a 2D image and a 3D cloud of points      │─── 300
│            simultaneously acquired                   │
└─────────────────────────────────────────────────────┘
                         │
                         ▼
┌─────────────────────────────────────────────────────┐
│  Detecting in the 2D image a set of pixels representing the  │─── 301
│            barrier of the level crossing             │
└─────────────────────────────────────────────────────┘
                         │
                         ▼
┌─────────────────────────────────────────────────────┐
│  Detection of barrier from the 3D cloud of point based on the  │─── 302
│                      database                        │
└─────────────────────────────────────────────────────┘
                         │
                         ▼
┌─────────────────────────────────────────────────────┐
│  Synthetizing a virtual 2D image from the 3D cloud of points  │─── 303
└─────────────────────────────────────────────────────┘
                         │
                         ▼
┌─────────────────────────────────────────────────────┐
│       Merging the 2D image with the virtual 2D image       │─── 304
└─────────────────────────────────────────────────────┘
                         │
                         ▼
┌─────────────────────────────────────────────────────┐
│  Determining one or more parameters of the barrier of the  │─── 305
│                    level crossing                    │
└─────────────────────────────────────────────────────┘
                         │
                         ▼
```

Figure 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A Video Analytic System for Rail Crossing Point Protection. **ZHAO GUANGLIANG et al.** IEEE International Conference on Advanced Video and Signal Based Surveillance (AVSS). IEEE, 16 November 2021, 1-8